(19) **Europäisches Patentamt**
**European Patent Office**
**Office européen des brevets**

(11) **EP 1 931 063 B1**

(12) **EUROPEAN PATENT SPECIFICATION**

(45) Date of publication and mention
of the grant of the patent:
**21.08.2013 Bulletin 2013/34**

(51) Int Cl.:
***H04B 7/26*** *(2006.01)* ***H04B 7/155*** *(2006.01)*

(21) Application number: **07254718.5**

(22) Date of filing: **06.12.2007**

(54) **On-channel repeater**

On-Kanal-Zwischenverstärker

Répéteur sur canal

(84) Designated Contracting States:
**BE DE FR IT**

(30) Priority: **06.12.2006 GB 0624411**

(43) Date of publication of application:
**11.06.2008 Bulletin 2008/24**

(73) Proprietor: **BRITISH BROADCASTING CORPORATION**
**Tadworth, Surrey KT20 6NP (GB)**

(72) Inventors:
• **Moss, Peter Neil**
**British Broadcasting Corporation**
**Tadworth, Surrey KT20 6NP (GB)**

• **Wiewiorka, Adam Edward**
**British Broadcasting Corporation**
**Tadworth, Surrey KT20 6NP (GB)**

(74) Representative: **Reeve, Nicholas Edward**
**Reddie & Grose LLP**
**16 Theobalds Road**
**London WC1X 8PL (GB)**

(56) References cited:
**EP-A1- 1 724 946     WO-A1-2005/041571**
**GB-A- 2 306 082**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

This invention relates to an apparatus and a method for reducing tap noise, and relates in particular to on-channel repeaters in which the apparatus and method are incorporated.

On-channel repeaters are used in the broadcasting field to receive RF (radio frequency) signals, amplify them, and retransmit them onward on the same frequency. On-channel repeaters are sometimes termed active deflectors.

In an on-channel repeater, due to unwanted coupling or feedback between the receiving and the transmitting antenna, the repeater can also receive its own retransmitted output, thus causing instability and relaxation oscillations. Our International Patent Application WO97/14942 and European Patent Application EP772310 describe a method and apparatus which has been found to be surprisingly effective in removing this feedback. In this method there is an amplification path between the input and output antennas which provides substantially linear processing and includes a delay sufficient to decorrelate the output and input. The repeater includes an amplification path providing substantially linear processing without demodulation and decoding, an adaptive filter and a filter estimator. The filter-estimator is responsive to the signal in the amplification path for correlating the signal in the amplification path before the delay with a noise-like signal taken after the delay to produce a plurality of correlation or tap coefficients. The filter estimator may use the least mean squares (LMS) method to determine the control or tap coefficients that are then applied in the adaptive filter. An adaptive filter in the form of a transversal filter receives the signal in the amplification path and is controlled by the control or tap coefficients to provide a modified signal, and a combiner combines the modified signal with the signal in the amplification path so as to reduce the effect of the feedback. In this way, unwanted feedback from the output of the active deflector to the input is substantially eliminated. The compensation conveniently makes use of the inherent noise-like property of the signal (as described it is an OFDM signal) however a separate noise signal may be added if necessary.

In our UK patent application GB 0609933.7 the filter estimator receives the signal from the transmitter antenna, rather than from the amplification path.

An example of a transceiver of the type described in our applications GB 0609933.7 is shown in Figure 1. The transceiver 10 has a receiving antenna 12 which is coupled to an amplification path 14 which includes an adder 16, a decorrelating delay 18, and an amplifier 20. The output of the amplifier is applied to a transmitting antenna 22. The signal from the transmitting antenna 22 is applied as a reference signal to a filter estimator 24, which also receives the output of adder 16, and to an adaptive filter 26, which applies an output to the subtractive or inverting input of adder 16. The construction and operation of the whole of this corrector circuitry 28 is described in detail in our earlier application. Part of the output of the transmitter antenna will be picked up by the receiving antenna as indicated by the dashed line 30, as unwanted feedback. The corrector circuitry 28 removes the effect of this feedback by combining the modified signal from the adaptive filter with the signal in the amplification path.

Document GB2306082 discloses a prior art on-channel repeater.

An on-channel repeater can be used for two purposes, namely coverage extension and hole filling. Coverage extension is used if the received signal strength is insufficient in a particular area, and the repeater is then used as an additional transmitter, often as a part of a Single Frequency Network (SFN).

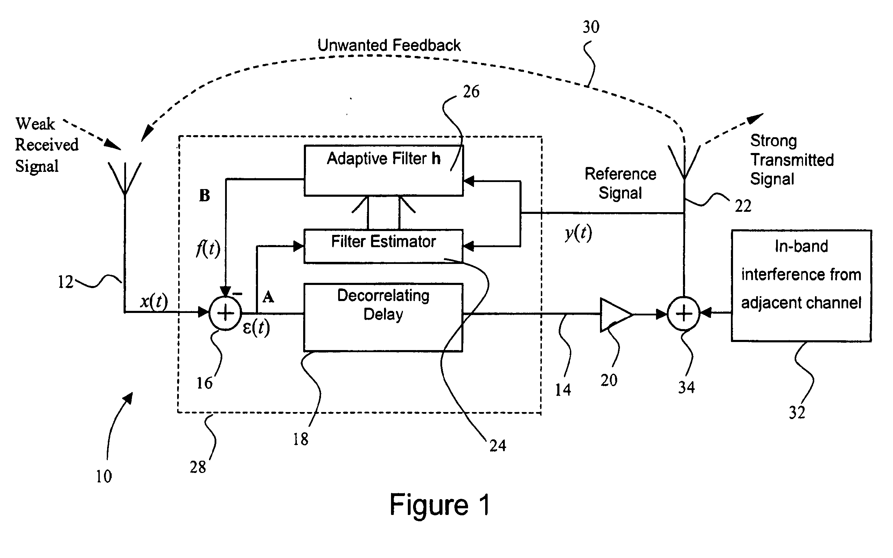

In hole-filling, the received signal strength is sufficient, but signals on adjacent channels to the desired signal are so strong that domestic receivers have insufficient dynamic range to demodulate the wanted channel successfully. In extreme cases, in areas very close to adjacent channel transmitters, the intermodulation products from the adjacent channels interfere directly with the wanted signal, even though spectral mask requirements have been fulfilled. Therefore, it follows that the repeater must remove the intermodulation products of co-sited adjacent channels that arrive at its input, as well as removing the unwanted feedback. Referring to Figure 1, we have appreciated that any interfering signal, illustrated at 32, generated externally to the transceiver may be combined with the transmitter signal as illustrated by the notional combiner 34 and contribute to the unwanted feedback.

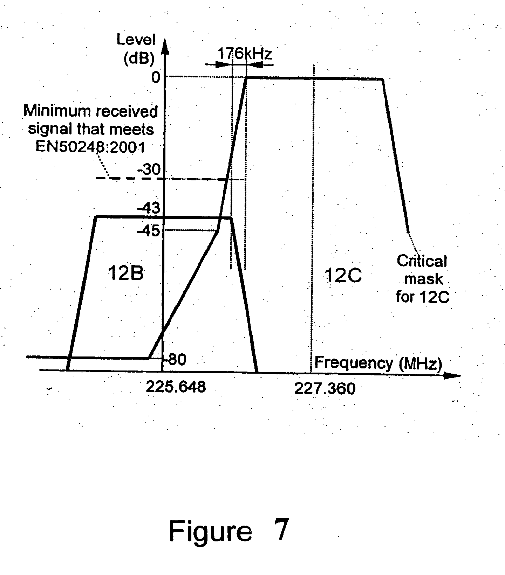

Figure 7 illustrates possible requirements on such a repeater. The figure is a spectral diagram showing the signals in and adjacent to a wanted channel at 225.648 MHz when there is a strong signal on the adjacent channel at 227.360 MHz. Typically, the adjacent channel signals can be up to 53dB larger at the input than the received wanted signal, imposing stringent requirements of selectivity of filters, linearity of mixers and dynamic range of digital-to-analog converters. At its main input, fed from the receiving antenna, the device should cope with a parasitic feedback-to-received signal ratio of up to 35dB, while the cancellation of this feedback should be at 45 to 50dB in order not to degrade the signal-to-noise ratio of the recovered signal. According to standard EN50248:2001, Characteristics of DAB Receivers, Section 7.3.3, a consumer DAB receiver must be able to decode a signal surrounded by adjacent channels at +30dB and cope with any signals 5MHz away from the centre frequency at +40dB.

We have appreciated that in an on-channel repeater comprising an adaptive filter, the input signal being amplified will perturb calculation of the necessary filter tap coefficients and will degrade the repeater's ability to remove the effects of feedback. We have appreciated that an improved on-channel repeater is therefore desired.

SUMMARY OF THE INVENTION

The invention is defined in the independent claims below to which reference should now be made. Advantageous features of the invention are set forth in the appendent claims.

BRIEF DESCRIPTION OF THE DRAWINGS

The invention will now be described in more detail by way of example with reference to the accompanying drawings, in which:

**Figure 1** (described above) is a block diagram of a known on-channel repeater as described in our earlier application;
**Figure 2** is a corresponding block diagram of an on-channel repeater in accordance with the present invention;
**Figure 3** illustrates for the purposes of explanation a one-tap architecture system;
**Figure 4** illustrates the architecture of the $k^{th}$-tap of the system;
**Figure 5** illustrates an alternative embodiment of the invention;
**Figure 6** is a graph illustrating the performance of the preferred embodiment in comparison to known on-channel repeaters; and
**Figure 7** (described above) is a spectral diagram illustrating typical requirements for such a repeater.

DETAILED DESCRIPTION OF THE PREFERRED EMBODIMENTS

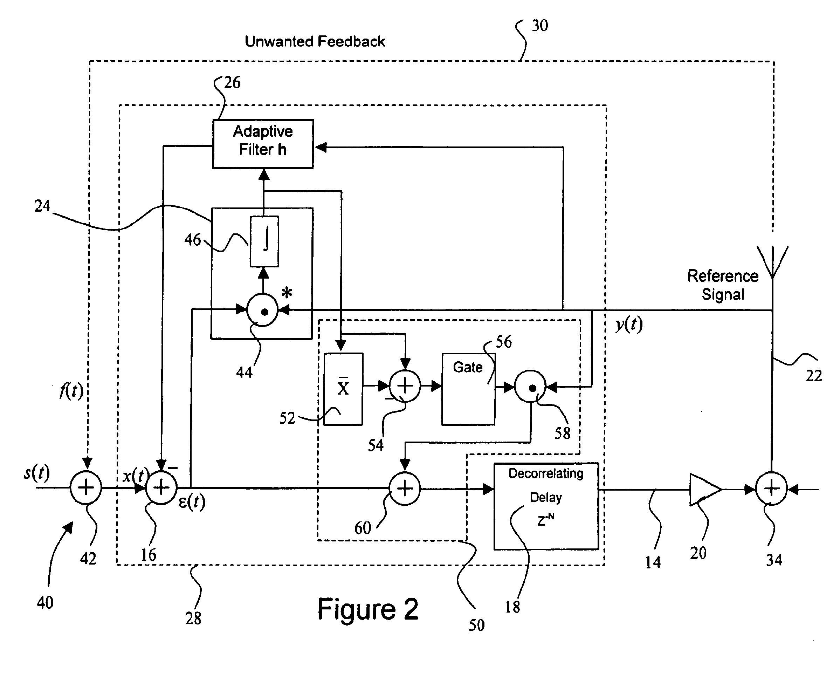

A preferred embodiment of an apparatus and corresponding method of reducing tap noise in an on-channel repeater 40 will now be described, with reference to Figure 2. The on-channel repeater is similar to that shown in Figure 1, and like components are therefore given the same reference number to the extent that they perform the same function. There are some differences in the diagrams, that will now be explained for clarity.

The unwanted feedback path 30 in Figure 2 is represented more formally as f(t), which is one of the two inputs into notional adder 40. The other input is the original broadcast signal s(t) without feedback.

Filter estimator 24 is illustrated in more detail in Figure 2. The illustration corresponds to tap zero of a multi-tap system. In general a delay $Z^{-k}$ exists prior to the conjugate input of correlator 44. The estimator can be seen to comprise a complex multiplier 44 and an integrator 46. The complex multiplier receives the input signal ε(t) after adder 16, and multiplies this with the complex conjugate of the reference signal y(t) taken from after the decorrelating delay 18. In practice, the reference signal y(t) can be taken from directly after the delay 18, or advantageously from the output antenna stage 22. The multiplier 44 and integrator 46 form a correlator that outputs a tap coefficient h for controlling the operation of adaptive filter 26 to minimise the effect of the feedback path on the output. In practice, the adaptive filter operates with a plurality of control or tap coefficients, and the filter estimator will comprise a correlator bank of correlators 44, 46, one for each tap coefficient that is to be determined. Only one correlator is shown in Figure 2 to simplify the diagram and subsequent discussion. The coefficients, which shall be referred to as tap coefficients, can be represented as a vector, which shall be referred to as a tap vector.

The output of the multiplier is then integrated in integrator 46 and passed to the adaptive filter 26. The filter estimator 24 also comprises a scaling stage μ before the integrator, though this is not shown in the diagram.

The preferred embodiment of the invention further comprises tap noise reduction circuit 50, comprising averager 52, subtractor 54, a gate or limiter circuit 56, complex mulitplier 58 and adder 60. The output from the filter estimator circuit is passed as an input to both the averager 52 and the subtractor 54. The output of the averager is subtracted from the output of the filter estimator received at the other subtractor input. The result of the subtraction is then passed to the gate or limiter 56, and then to multiplier 58. Complex multiplier 58 multiplies the output from the gate or limiter 56 by the delayed reference signal y(t), itself derived either from after the delay 18 or from the output antenna 22. The result of the multiplication is then passed to the adder 60, which is located in the delay line 14 before the decorrelating delay block 18. The adder adds the multiplication output to error signal ε(t) before the signal is passed into the decorrelating delay 18. The noise reduction circuit therefore forms an effective feed forward loop.

We have appreciated that the block diagram in Figure 1 can be regarded as a classical LMS cancellation topology, but with the significant feature that the excitation signal for the adaptive filter and the feedback path are derived from the input signal through a decorrelating delay. A classical architecture for example would train the adaptive filter by exciting the system directly at the output, effectively discounting any input on the left hand side of the diagram. The error term ε(t) could then converge to zero. In fact, if trying to determine the nature of the feedback path, this is exactly what is desired having inserted a known test signal at the output. However, in an on-channel repeater, a signal must always also be passed from the input to the output in order for the repeater to function. Consequently, ε(t) can never reduce to zero as it must always contain the wanted signal.

Thus, we have appreciated that the calculation of the wanted tap vector for the adaptive filter is continuously affected by the signal ε(t) containing the signal that is to be amplified. The signal ε(t) can be thought of as being noise-like, as it is a constantly varying perturbation at the correlator bank input of the filter estimator. We have investigated the magnitude and frequency spectrum of this term, which we shall call the tap noise, and found that it is initially flat with a one-sided power spectral density (PSD) of magnitude μ/π, and is 3dB down at a frequency of

$$f_{NB} = \frac{\mu}{2\pi\tau}$$

and decays at 6dB/octave thereafter. μ is the convergence factor (the pre-integrator constant in the scaling stage), and τ is the system sampling interval.

This noise-like tap disturbance causes an unwanted residue in the wanted signal post-cancellation, limiting system performance. Although the tap noise is noise-like, it is deterministic. Consequently both the noise and its effect on the signal can be estimated and the result used in a feed-forward cancellation scheme. This is the principal of the tap noise reduction apparatus and technique illustrated in Figure 2. The noise reduction circuit 50 estimates the noise in the calculation of the tap coefficients, and its effect on the output signal, and thereby provides a feed-forward cancellation signal that is added to the signal path just before the delay line to substantially cancel the unwanted prior disturbance caused by the tap noise.

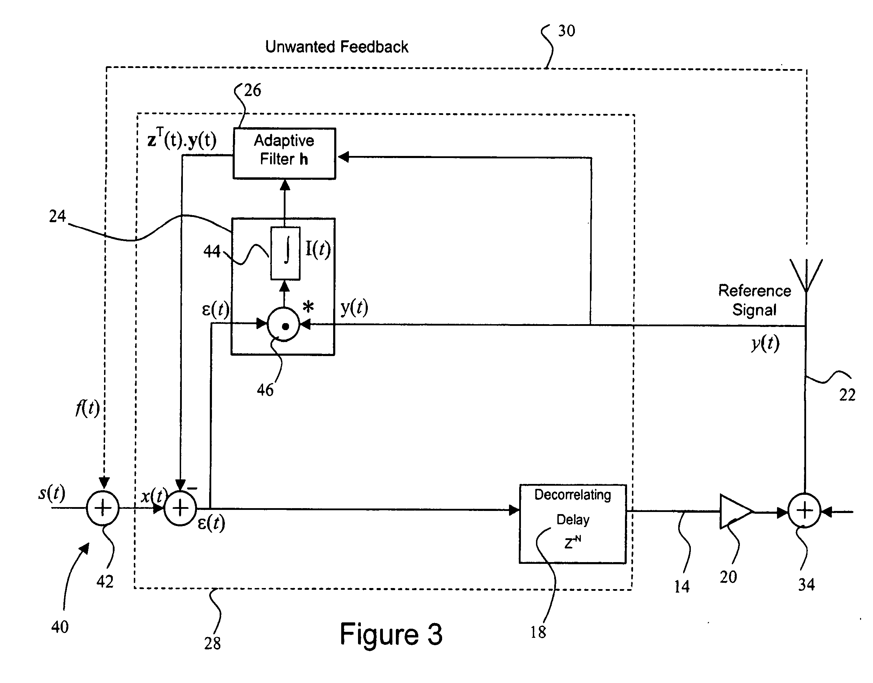

To understand the concept better, we shall first consider the one-tap system shown in Figure 3. Having only one tap means that the adaptive filter is controlled by a single coefficient, so that the tap vector is a scalar complex value. In a one-tap system, the presence of the signal ε(t) means that the value of the tap coefficient output by the filter estimator varies as if it had a noise-like component z(t).

Referring to Figure 3, we can write the tap noise vector z(t) as

$$\mathbf{z}(t) = \left\{ \left( \varepsilon(t) \mathbf{y}^{*}(t) \right) * I(t) \right\} - E\{\mathbf{h}\} \dots\dots\dots\dots\dots\dots\dots\dots\dots\dots(1)$$

where the bold letters are used to denote vector quantities; $I(t)$ is the impulse response of the integrator, * ' is the convolution operator, and E the expectation operator, or 'average'. The expectation operator is subtracted to centre the noise term on zero, rather than leaving it with a non-zero bias.

As we have just one tap element however this equation reduces to

$$z(t) = \left\{ \left( \varepsilon(t) y^{*}(t) \right) * I(t) \right\} - E\{h\} \dots\dots\dots\dots\dots\dots\dots\dots\dots\dots(2)$$

The consequential disturbance in the signal just prior to the delay line 18 (via adder 16) is hence

$$\psi(t) = -\mathbf{z}^{\mathbf{T}}(t) y(t) = -z(t) y(t) = -\left( \left\{ \left( \varepsilon(t) y^{*}(t) \right) * I(t) \right\} - E\{h\} \right) y(t) \dots(3)$$

The minus sign reflects the fact that this noise is subtracted from the signal by means of the negative feedback loop.

The tap noise reduction circuit 50 is provided to estimate this quantity and add a signal of corresponding magnitude but opposite sign to the delay line. The averager 52 is therefore arranged to receive the output tap value from the filter estimator, and estimate the mean value. The mean value can be understood as an approximation of what the correct tap value would be assuming that no noise was present. The mean value is then subtracted from the instantaneous tap value output from the filter estimator to provide an estimate of tap noise z(t).

The mean is preferably obtained from a low pass filter with empirically determined characteristics set in consideration of the frequency range which is to be removed. It will be appreciated that some of the variations in the tap noise will be due to naturally occurring changes in the feedback path, while other variations will be due to noise. The variations due to changes in the path can be regarded as having a lower frequency range than the higher frequency noise, and so can be allowed through with a suitable choice of pass band for the filter. If these variations were screened out, then the repeater would lose its ability to track the variable feedback path. As noted above however, the range of frequencies allowed to pass the filter is an engineering choice balancing the necessary path tracking performance with the degree of available noise reduction. Typical values in the DVB-T version of the repeater are 20Hz bandwidth filtering and 4kHz tap noise bandwidth, yielding approximately 13dB of noise reduction.The subtraction of the filtered signal from the unfiltered signal occurs every iteration.

The tap noise value z(t) is then fed to the multiplier 58 to scale the output signal y(t) and sum the result at adder 60 just prior to the delay line 18, in accordance with equation (28). In practice however, we have found it advantageous to include an amplitude limiter or gate 58. Without the limiter, the feed forward loop provided by the noise reduction circuit 50 and can cause instability in the output of the on-channel repeater. The amplitude limiter therefore preferably limits the tap noise estimate to a maximum value typically in the range 0.2 to 0.5. This ensues that the parasitic outer loop around the delay line formed by the noise reduction circuit 50 is stable and does not unduly perturb the system forward response. Alternatively a gate may be used, only opening for values falling below a threshold set in the same range. Again, this ensures stability. The advantage of the gate is that it has zero output during input overload, rather than a fixed value which disturbs later convergence. Clearly whichever is used, the noise reduction is only effective if the tap noise variance is predominantly well below the threshold of the amplitude limiter or gate. In practice, this has not proved to be a difficult for typical system operating parameters.

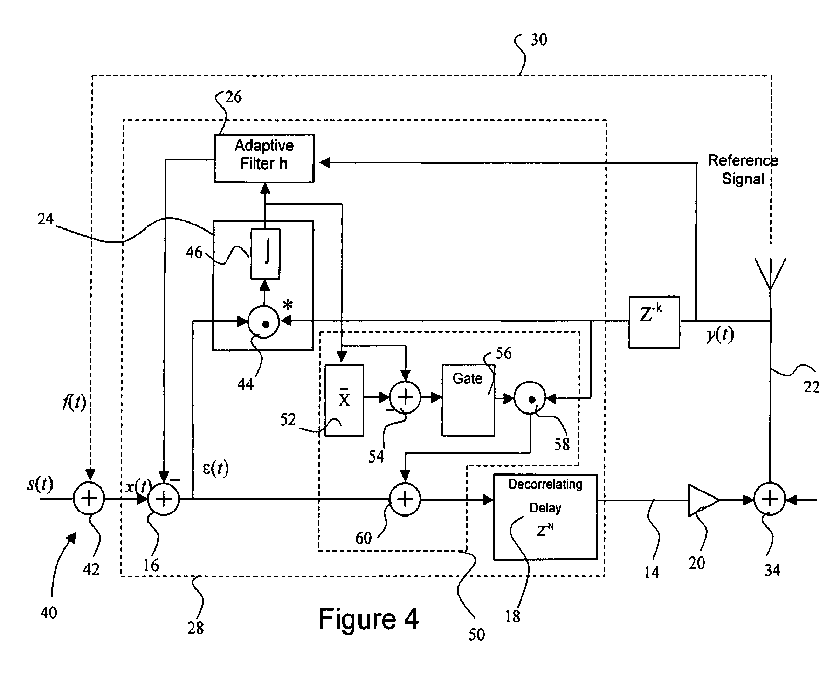

In practice, the noise reduction circuit will receive a plurality of control coefficients from the filter estimator in the form of a tap vector. The $k^{th}$ term of the vector is characterised by its associated delay $Z^{-k}$, as shown in Figure 4. The operation of the noise reduction circuit in this case is identical to that described above, only the step of subtracting the mean from the instantaneous value is then carried out separately for each of the respective coefficients, in order to produce a tap noise vector.

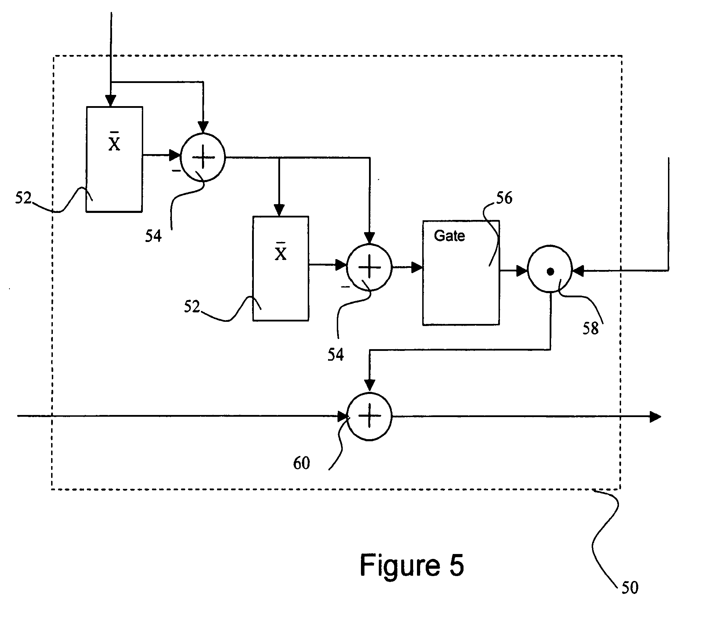

Although a single averager and associated subtractor are shown above, in practice superior performance is obtained by the alternative embodiment of Figure 5 in which two such sections are cascaded. This allows the system to continue reducing noise in the presence of significant time-varying behaviour of the feedback path. Doppler effects caused by passing vehicles or people, for example, cause variations in the feedback path itself that need to be compensated for by the adaptive filter. The noise reduction circuit will however see such variations as noise and so will act to cancel the variations. It is therefore important that the noise reduction circuit is configured to ignore variations in the feedback path due to effects such as Doppler shifting of the signal, but cancel the noise in the calculation of the tap coefficients stemming from the presence of a varying input or excitation signal. The double configuration of averager and subtractor arrangement therefore creates a high pass filter to screen out the more slowly varying changes in the feedback path. The cut-off frequency of the resulting high-pass characteristic is therefore set at the upper limit of the expected feedback path Doppler variation (typically 5-20Hz). Frequencies below that value are considered legitimate time-variation of the taps, whereas those above cut-off are considered noise and passed to the feedforward cancellation stage. Of course, the higher the cut-off frequency is set the more 'actual' noise is ignored and the less noise reduction is obtained. The choice of filter parameters has to be a well considered engineering compromise.

In simulations a 16-tap system with COFDM excitation was investigated. The system parameters were as tabulated below. The purpose of the simulation was to compare the original system with the noise-reduced system, with the convergence factor $\mu$ as a parameter. The convergence factor $\mu$ can be thought of as a scalar multiplier before the integrator 44 in the filter estimator. It describes the system's ability to track changes in the feedback path. A high value of $\mu$ means that the system tracks such changes more quickly, but without noise reduction means that the signal $\varepsilon(t)$ perturbs the tap vector more.

The steady-state cancellation performance in the presence of a feedback term varying as $\exp j\omega t$ that was measured, rather than convergence time per se.

**Simulation parameters**

| Signal representation | **Complex baseband, unit variance** |
| --- | --- |
| Sampling frequency | **2.048Ms/s** |
| COFDM modulation | **2048-carrier, DQPSK, guard interval 0.25** |
| No. of modulated carriers | **1897 (92.6% Nyquist)* *The system was compensated for the fact that the signal occupancy is not 100% Nyquist.** |
| Convergence factor $\mu$ | **0.01, 0.005, 0.002 or 0.0005 (see results)** |
| No. of complex taps | **16** |

(continued)

| Decorrelating delay | 16 samples |
|---|---|
| Feedback level | +20dB magnitude, single-tap (tap 8 of 16 indexed 0-15) rotating phase at 0-8Hz (see results) |
| Forward gain | 0dB |
| No. of simulation iterations at 2.048Ms/s rate | 1 x $10^6$ nominal |

For all noise reduction simulations the noise reduction block parameters were set as follows:

**Noise reduction parameters**

| Number of cascaded averager/subtractor sections | 2 |
|---|---|
| Averager characteristic | N=2 Butterworth low-pass, 3dB-cutoff 40Hz ($\mu$=0.002), 100Hz ($\mu$=0.005) or 200Hz ($\mu$=0.01) |
| Limit/Gate block | Gate |
| Threshold | 0.2 |

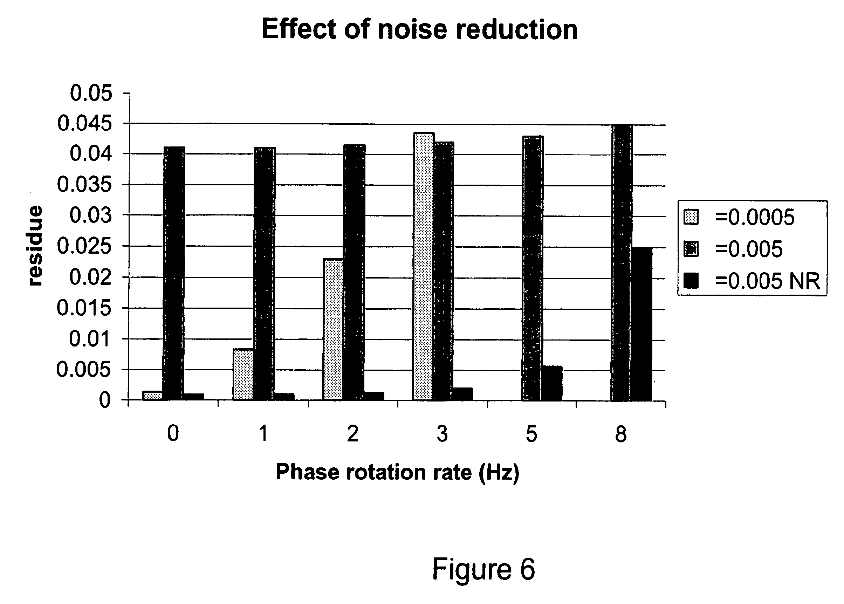

The convergence factor was initially set to 0.0005 and the cancellation performance evaluated as a function of feedback phase rotation rate $\omega$ from 1 to 3 Hz. This represents a continuous perturbation in the feedback path of 1 to 3 Hz. The cancellation performance was established in all cases by subtracting the output from the input, to provide a cancellation residue, and calculating its variance over the last approximate 10% (100,000 iterations) of the simulation where the system was deemed to be in steady state. Next the value of $\mu$ was raised to 0.002 and the experiment repeated with the noise reduction first off, and then on. We found that a small value of $\mu$=0.0005 was better at low rates of change than $\mu$=0.002, but was overtaken in performance by $\mu$=0.002 at higher rates of change. This shows, as expected, that the higher value of $\mu$ allows faster response at the expense of increased tap noise. Then, comparing the $\mu$=0.002 noise-reduced setting with the non-noise-reduced $\mu$=0.002 values, we found that the noise reduction is very effective at low phase rotation rates. The performance falls off comparatively at higher rates, and was in fact found to have a detrimental effect at a rate of 3Hz. The fall-off is due to breakthrough of the path Doppler tone, correctly appearing at the tap to the noise-cancelling stage. At this point, it spuriously introduces an unwanted term in the final output. These results suggested that we should employ a higher $\mu$ value than this, in conjunction with the noise reduction technique. Our goal was to keep a low residual noise values over as high a rotation rate range as possible. The value of $\mu$ was increased to 0.005, ten times the initial value and the performance investigated over a wider range of phase rotation rates. Figure 6 illustrates the results.

These results show that with noise reduction off, the high value of $\mu$ =0.005 gives a high noise floor which is very tolerant to phase change rate. It is substantially outperformed at the lowest rates by the $\mu$ =0.0005 system. However with noise reduction enabled, the high-$\mu$ system beats the standard low-$\mu$ results at all rotation rates considered; indeed the performance at 8Hz is similar to the original system at 2Hz.

Although the system has been described in terms of hardware such as discrete filters, averagers and adders, it will be appreciated that the preferred embodiments of the invention could also be implemented in software, or in a combination of both software and hardware.

Furthermore, although embodiments having only one or two filter sections having averages and adders are described, embodiments having more than two filters are contemplated.

Additionally, instead of a using a low pass filter as the averager, a mathematical averager based on summing the inputs could be used in the tap noise estimator circuit. The averager could be implemented as an exponentially weighted output of past samples, or as a uniformly weighted output of past samples (block averager, sliding or hold).

In a further embodiment, the combination of averager and subtractor could be replaced with a high pass filter.

Although, the preferred embodiment of the invention is an on-channel repeater, the technique for reducing noise could also be utilised in any Least Mean Squares based system with non-zero steady state error $\varepsilon(t)$.

**Claims**

1. An on-channel repeater (40), comprising;
   a receiving antenna (12) for receiving an RF input signal (s(t));
   a transmitting antenna (22) for transmitting a signal on the same frequency as the input signal;
   an amplification path (14) between the receiving and transmitting antennas (12, 22), the amplification path providing substantially linear processing;
   a reference signal input for receiving a reference signal (y(t)), wherein the reference signal is the signal transmitted from the transmitting antenna (22);
   an estimator (24) coupled to the reference signal input for producing a control signal comprising a plurality of control coefficients;
   an adaptive filter (26) coupled to the reference signal input and controlled by the control coefficients to provide a modified signal;
   a first combiner (16) for combining the modified signal with the signal in the amplification path so as to reduce the effect of the feedback (f(t));
   a noise estimator (50) coupled to the control signal for producing a noise reduction signal,
   a second combiner (60) for combining the noise reduction signal with the signal in the amplification path to reduce the noise in the control signal; and
   a power amplifier (20) in the amplification path receiving the combined signal and applying it to the transmitting antenna (22).

2. The on-channel repeater of claim 1, wherein the noise estimator (50) comprises a first filter having an averager (52) for determining the average value of the control signal and outputting a control signal average, and a first subtractor (54) arranged to subtract the control signal average from the control signal to output a first filtered signal.

3. The on-channel repeater of claim 2, wherein the noise estimator (50) comprises an input for receiving the reference signal y(t), and a combiner (58) for combining the reference signal y(t) with the first filtered signal to produce the noise reduction signal.

4. The on-channel repeater of claim 2 or 3, comprising an amplitude limiter (56) for limiting the amplitude of the first filtered signal.

5. The on-channel repeater of claim 4, wherein when the first filtered signal is above a predetermined threshold, the amplitude limiter outputs the predetermined threshold signal value.

6. The on-channel repeater of claim 4, wherein when the first filtered signal is above a predetermined value the amplitude limiter outputs a value of zero.

7. The on-channel repeater of any of claims 2 to 6, comprising a second filter having a second averager and a second subtractor arranged to receive the control signal before the first filter, wherein the second averager determines the average value of the control signal and outputs a control signal average, and the second subtractor subtracts the control signal average from the control signal to output a second filtered signal, and wherein the first filter is arranged to receive the second filtered signal.

8. The on-channel repeater of any of claims 2 to 7, wherein the averager is a low pass filter.

9. The on-channel repeater of claim 1, wherein the input for receiving the reference signal is coupled to the transmitting antenna after the power amplifier.

10. An on-channel repeater according to claim 1, in which the amplification path includes a decorrelating delay (18).

11. The on-channel repeater of claim 10, wherein the input for receiving the reference signal is coupled to the amplification path after the decorrelating delay.

12. The on-channel repeater of claim 11, wherein the noise estimator is a high pass filter.

13. An on-channel repeater according to claim 1, in which the estimator receives the reference signal as one input and the output of the combining circuit (16) as another.

**14.** An on-channel repeater according to any preceding claim, in which the output of the power amplifier is applied to the transmitting antenna through a coupler.

**15.** An on-channel repeater according to any preceding claim, in which the input for receiving the reference signal is coupled to the transmitting antenna by a coupler.

**16.** An on-channel repeater according to any preceding claim, comprising a transmitter which transmits a potentially interfering signal, the transmitter output being coupled to the said transmitter antenna for transmission of the interfering signal.

**17.** An on-channel repeater according to any preceding claim, in which the on-channel repeater is operative with OFDM signals.

**18.** An on-channel repeater according to any preceding claim, in which the on-channel repeater is a DAB repeater.

**Patentansprüche**

**1.** On-Channel-Repeater (40), der Folgendes umfasst:

eine Empfangsantenne (12) zum Empfangen eines RF-Eingangssignals (s(t));
eine Sendeantenne (22) zum Senden eines Signals auf derselben Frequenz wie das Eingangssignal;
einen Verstärkungspfad (14) zwischen der Empfangs- und der Sendeantenne (12, 22), wobei der Verstärkungspfad im Wesentlichen lineare Verarbeitung bietet;
einen Referenzsignaleingang zum Empfangen eines Referenzsignals (y(t)), wobei das Referenzsignal das von der Sendeantenne (22) gesendete Signal ist;
ein Schätzglied (24), das mit dem Referenzsignaleingang gekoppelt ist, um ein Steuersignal zu erzeugen, das mehrere Steuerkoeffizienten beinhaltet;
ein Adaptivfilter (26), das mit dem Referenzsignaleingang gekoppelt ist und durch die Steuerkoeffizienten gesteuert wird, um ein modifiziertes Signal zu erzeugen;
einen ersten Kombinator (16) zum Kombinieren des modifizierten Signals mit dem Signal in dem Verstärkungspfad, um die Wirkung der Rückkopplung (f(t)) zu reduzieren;
einer Rauschschätzer (50), der mit dem Steuersignal gekoppelt ist, um ein Rauschreduktionssignal zu erzeugen,
einen zweiten Kombinator (60) zum Kombinieren des Rauschreduktionssignals mit dem Signal in dem Verstärkungspfad, um das Rauschen in dem Steuersignal zu reduzieren; und
einen Leistungsverstärker (20) im Verstärkungspfad, der das kombinierte Signal empfängt und es an die Sendeantenne (22) anlegt.

**2.** On-Channel-Repeater nach Anspruch 1, wobei der Rauschschätzer (50) ein erstes Filter mit einem Mittelwertbildner (52) zum Ermitteln des Mittelwertes des Steuersignals und zum Ausgeben eines Steuersignaldurchschnitts sowie ein erstes Subtrahierglied (54) zum Subtrahieren des Steuersignaldurchschnitts vom Steuersignal zum Ausgeben eines ersten gefilterten Signals umfasst.

**3.** On-Channel-Repeater nach Anspruch 2, wobei der Rauschschätzer (50) einen Eingang zum Empfangen des Referenzsignals y(t) und einen Kombinator (58) zum Kombinieren des Referenzsignals y(t) mit dem ersten gefilterten Signal umfasst, um das Rauschreduktionssignal zu erzeugen.

**4.** On-Channel-Repeater nach Anspruch 2 oder 3, der einen Amplitudenbegrenzer (56) zum Begrenzen der Amplitude des ersten gefilterten Signals umfasst.

**5.** On-Channel-Repeater nach Anspruch 4, wobei, wenn das erste gefilterte Signal über einer vorbestimmten Schwelle liegt, der Amplitudenbegrenzer den vorbestimmten Schwellensignalwert ausgibt.

**6.** On-Channel-Repeater nach Anspruch 4, wobei, wenn das erste gefilterte Signal über einem vorbestimmten Wert liegt, der Amplitudenbegrenzer einen Wert von null ausgibt.

**7.** On-Channel-Repeater nach einem der Ansprüche 2 bis 6, der ein zweites Filter mit einem zweiten Mittelwertbildner und ein zweites Subtrahierglied zum Empfangen des Steuersignals vor dem ersten Filter umfasst, wobei der zweite Mittelwertwertbildner den Mittelwert des Steuersignals ermittelt und einen Steuersignaldurchschnitt ausgibt und das zweite Subtrahierglied den Steuersignaldurchschnitt vom Steuersignal subtrahiert, um ein zweites gefiltertes Signal auszugeben, und wobei das erste Filter zum Empfangen des zweiten gefilterten Signals ausgelegt ist.

8. On-Channel-Repeater nach einem der Ansprüche 2 bis 7, wobei der Mittelbildner ein Tiefpassfilter ist.

9. On-Channel-Repeater nach Anspruch 1, wobei der Eingang zum Empfangen des Referenzsignals mit der Sendeantenne hinter dem Leistungsverstärker gekoppelt ist.

10. On-Channel-Repeater nach Anspruch 1, wobei der Verstärkungspfad ein Dekorrelationsverzögerungsglied (18) beinhaltet.

11. On-Channel-Repeater nach Anspruch 10, wobei der Eingang zum Empfangen des Referenzsignals mit dem Verstärkungspfad hinter dem Dekorrelationsverzögerungsglied gekoppelt ist.

12. On-Channel-Repeater nach Anspruch 11, wobei der Rauschschätzer ein Hochpassfilter ist.

13. On-Channel-Repeater nach Anspruch 1, bei dem der Schätzer das Referenzsignal als einen Eingang und den Ausgang der Kombinationsschaltung (16) als einen anderen empfängt.

14. On-Channel-Repeater nach einem vorherigen Anspruch, wobei der Ausgang des Leistungsverstärkers durch einen Koppler an die Sendeantenne angelegt wird.

15. On-Channel-Repeater nach einem vorherigen Anspruch, bei dem der Eingang zum Empfangen des Referenzsignals durch einen Koppler mit der Sendeantenne gekoppelt ist.

16. On-Channel-Repeater nach einem vorherigen Anspruch, der einen Sender umfasst, der ein potentiell störendes Signal sendet, wobei der Senderausgang mit der genannten Sendeantenne zum Senden des störenden Signals gekoppelt ist.

17. On-Channel-Repeater nach einem vorherigen Anspruch, wobei der On-Channel-Repeater mit OFDM-Signalen arbeitet.

18. On-Channel-Repeater nach einem vorherigen Anspruch, wobei der On-Channel-Repeater ein DAB-Repeater ist.

**Revendications**

1. Répéteur sur canal (40), comprenant :

    une antenne de réception (12) pour recevoir un signal d'entrée (s(t));
    une antenne de transmission (22) pour transmettre un signal sur la même fréquence que le signal d'entrée;
    un chemin d'amplification (14) entre l'antenne de réception et l'antenne de transmission (12, 22), le chemin d'amplification fournissant un traitement sensiblement linéaire;
    une entrée de signal de référence recevant un signal de référence (y(t)), où le signal de référence est le signal transmis de l'antenne de transmission (22);
    un estimateur (24) couplé à l'entrée du signal de référence pour produire un signal de commande comprenant une pluralité de coefficients de commande;
    un filtre adaptatif (26) couplé à l'entrée du signal de référence et commandé par les coefficients de commande pour fournir un signal modifié;
    un premier combineur (16) pour combiner le signal modifié avec le signal dans le chemin d'amplification de manière à réduire l'effet de la réaction (f(t));
    un estimateur de bruit (50) couplé au signal de commande pour produire un signal de réduction de bruit;
    un deuxième combineur (60) pour combiner le signal de réduction de bruit avec le signal dans le chemin d'amplification afin de réduire le bruit dans le signal de commande; et
    un amplificateur de puissance (20) dans le chemin d'amplification recevant le signal combiné et l'appliquant à l'antenne de transmission (22).

**2.** Répéteur sur canal selon la revendication 1, dans lequel l'estimateur de bruit (50) comprend un premier filtre ayant un formateur de moyennes (52) pour déterminer la valeur moyenne du signal de commande et sortir une moyenne de signal de commande, et un premier soustracteur (54) arrangé pour soustraire la moyenne de signal de commande du signal de commande afin de sortir un premier signal filtré.

**3.** Répéteur sur canal selon la revendication 2, dans lequel l'estimateur de bruit (50) comprend une entrée pour recevoir le signal de référence y(t) et un combineur (58) pour combiner le signal de référence y(t) avec le premier signal filtré afin de produire un signal de réduction de bruit.

**4.** Répéteur sur canal selon la revendication 2 ou 3, comprenant un limiteur d'amplitude (56) pour limiter l'amplitude du premier signal filtré.

**5.** Répéteur sur canal selon la revendication 4, dans lequel lorsque le premier signal filtré est au-dessus d'un seuil prédéterminé, le limiteur d'amplitude sort la valeur de seuil prédéterminé du signal.

**6.** Répéteur sur canal selon la revendication 4, dans lequel lorsque le premier signal filtré est au-dessus d'une valeur prédéterminée, le limiteur d'amplitude sort une valeur de zéro.

**7.** Répéteur sur canal selon l'une quelconque des revendications 2 à 6, comprenant un deuxième filtre ayant un deuxième formateur de moyennes et un deuxième soustracteur arrangé pour recevoir le signal de commande avant le premier filtre, où le deuxième formateur de moyennes détermine la valeur moyenne du signal de commande et sort une moyenne de signal de commande, et le deuxième soustracteur soustrait la moyenne du signal de commande du signal de commande pour sortir un deuxième signal filtré, et où le premier filtre est arrangé pour recevoir le deuxième signal filtré.

**8.** Répéteur sur canal selon l'une quelconque des revendications 2 à 7, dans lequel le formateur de moyennes est un filtre passe-bas.

**9.** Répéteur sur canal selon la revendication 1, dans lequel l'entrée pour recevoir le signal de référence est couplée à l'antenne de transmission après l'amplificateur de puissance.

**10.** Répéteur sur canal selon la revendication 1, dans lequel le chemin d'amplification comprend un retard de décorrélation (18).

**11.** Répéteur sur canal selon la revendication 10, dans lequel l'entrée pour recevoir le signal de référence est couplée au chemin d'amplification après le retard de décorrélation.

**12.** Répéteur sur canal selon la revendication 11, dans lequel l'estimateur de bruit est un filtre passe-haut.

**13.** Répéteur sur canal selon la revendication 1, dans lequel l'estimateur reçoit le signal de référence comme une entrée et la sortie du circuit combineur (16) comme une autre.

**14.** Répéteur sur canal selon l'une quelconque des revendications précédentes, dans lequel la sortie de l'amplificateur de puissance est appliquée à l'antenne de transmission par un coupleur.

**15.** Répéteur sur canal selon l'une quelconque des revendications précédentes, dans lequel l'entrée pour recevoir le signal de référence est couplée à l'antenne de transmission par un coupleur.

**16.** Répéteur sur canal selon l'une quelconque des revendications précédentes, comprenant un transmetteur qui transmet un signal potentiellement brouilleur, la sortie du transmetteur étant couplée à ladite antenne du transmetteur pour la transmission du signal brouilleur.

**17.** Répéteur sur canal selon l'une quelconque des revendications précédentes, où le répéteur sur canal est opérationnel avec des signaux OFDM.

**18.** Répéteur sur canal selon l'une quelconque des revendications précédentes, dans lequel le répéteur sur canal est un répéteur DAB.

Figure 1

Figure 2

Unwanted Feedback

Reference Signal

Adaptive Filter **h**

Gate

Decorrelating Delay $z^{-N}$

$\overline{\text{X}}$

$y(t)$

$s(t)$

$f(t)$

$x(t)$

$\varepsilon(t)$

14

18

20

22

24

26

28

30

34

40

42

44

46

50

52

54

56

58

60

16

Figure 3

Figure 4

EP 1 931 063 B1

Figure 5

EP 1 931 063 B1

**Effect of noise reduction**

Figure 6

EP 1 931 063 B1

Figure 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9714942 A
- EP 772310 A
- GB 0609933 A
- GB 2306082 A